# EUROPÄISCHE PATENTSCHRIFT

(11) **EP 3 999 461 B1**
(45) Veröffentlichungstag und Bekanntmachung des Hinweises auf die Patenterteilung: **26.02.2025**
(21) Anmeldenummer: 20743628.8
(22) Anmeldetag: 16.07.2020
(51) Int. Cl.: B65H 67/06

(54) **HÜLSENMAGAZIN FÜR EINE KREUZSPULEN HERSTELLENDE TEXTILMASCHINE**
CORE MAGAZINE FOR A TEXTILE MACHINE WHICH PRODUCES CROSS-WOUND BOBBINS
MAGASIN DE BOBINOTS DESTINÉ À UNE MACHINE TEXTILE PRODUISANT DES BOBINES CROISÉES

(30) Priorität: 19.07.2019 DE 102019119653
(43) Veröffentlichungstag der Anmeldung: 25.05.2022
(73) Patentinhaber: Saurer Spinning Solutions GmbH & Co. KG, 52531 Übach-Palenberg (DE)
(72) Erfinder: PREDIGER, Eduard, 41061 Mönchengladbach (DE)
(74) Vertreter: Schniedermeyer, Markus
(86) Internationale Anmeldenummer: PCT/EP2020/070071
(87) Internationale Veröffentlichungsnummer: WO 2021/013665

(56) Entgegenhaltungen:
- EP-A1- 3 569 539
- EP-A2- 0 262 726
- EP-A2- 0 916 614
- WO-A1-2021/037870

## Beschreibung

Die Erfindung betrifft ein Hülsenmagazin für eine Kreuzspulen herstellende Textilmaschine, die an beiden Maschinenlängsseiten eine Vielzahl von Arbeitsstellen aufweist, wobei das Hülsenmagazin über mehrere antreibbare nebeneinander angeordnete Speicherreihen verfügt, die mit Leerhülsen bestückbar sind und jeweils über ein Endloszugmittel verfügen, das über Umlenkrollen geführt ist und eine Vielzahl von Hülsenaufnahmedornen aufweist, auf denen spitzenorientiert, jeweils eine Leerhülse deponierbar ist, und wobei das Hülsenmagazin einen Hülsenabstreifer aufweist, mit dem Leerhülsen auf ein nachgeschaltetes Quertransportband überführbar sind.

Hülsenmagazine für Kreuzspulen herstellende Textilmaschinen, in denen frische Leerhülsen für herzustellende Auflaufspulen bevorratet werden können, sind in verschiedenen Ausführungsformen bekannt und in zahlreichen Patentanmeldungen beschrieben.

In der DE 199 05 856 A1 ist beispielsweise eine Offenend-Rotorspinnmaschine beschrieben, die zwischen ihren Endgestellen auf beiden Maschinenlängsseiten eine Vielzahl von Arbeitsstellen aufweist und über ein maschinenendseitig angeordnetes, zentrales Hülsenmagazin verfügt.

Die Arbeitsstellen dieser Textilmaschine, die, wie üblich, jeweils über eine Spinnvorrichtung sowie eine nachgeschaltete Spulvorrichtung verfügen, sind über eine so genannte Leerhülsentransporteinrichtung mit dem Hülsenmagazin verbunden, das mehrere nebeneinander angeordnete, mit Aufnahmedornen ausgestattete Speicherreihen aufweist. Auf den Aufnahmedornen dieser Speicherreihen sind spitzenorientiert Leerhülsen gespeichert. Die Speicherreihen sind über eine Welle gekoppelt und mittels eines gemeinsamen Elektromotors antreibbar. Das bedeutet, ein Teil der Aufnahmedorne kann jeweils in einer bestimmten Höhe positioniert und die auf den entsprechenden Aufnahmedornen gespeicherten Leerhülsen dann mittels eines Hülsenschiebers auf ein nachgeschaltetes Muldenband überführt werden. Das Muldenband transportiert die Leerhülsen dann sukzessive entweder zu einer Hülsenübergabestellung oder zu einem Hülsenwender.

Der bekannte Hülsenschieber ist so ausgebildet, dass stets alle Transportketten des Hülsenmagazins gleichzeitig bedient werden, das heißt, der Hülsenschieber überführt stets alle in einer bestimmten Höhe positionierten Leerhülsen der Transportketten gleichzeitig auf das nachgeschaltete Muldenband, das, wie vorstehend angedeutet, über den Hülsenwender bzw. die Hülsenübergabestellung an maschinenlange Leerhülsentransportbänder angeschlossen ist. Über die Leerhülsentransportbänder werden die Leerhülsen dann bedarfsgerecht zu einem Serviceaggregat befördert, das im Bereich der Arbeitsstelle positioniert ist, die eine frische Leerhülse angefordert hat. Das Serviceaggregat wechselt die angeforderte Leerhülse dann in die betreffende Arbeitsstelle ein.

Die bekannte Einrichtung bzw. das bekannte Verfahren ermöglicht zwar eine relativ zuverlässige Versorgung der auf beiden Maschinenlängsseiten einer Offenend-Rotorspinnmaschine angeordneten Arbeitsstellen mit spitzenorientierten Leerhülsen, allerdings ist die bekannte Leerhülsentransporteinrichtung unter anderem bedingt durch die Konstruktion des Hülsenmagazins sehr unflexibel. Das heißt, aufgrund des gemeinsamen Antriebes der Speicherreihen des Hülsenmagazins sowie des gemeinsamen Hülsenschiebers ist es mit der in der DE 199 05 856 A1 beschriebenen Einrichtung nicht möglich, auf der betreffenden Textilmaschine gleichzeitig mehrere, unterschiedliche Garnpartien zu bearbeiten.

Eine Kreuzspulen herstellende Textilmaschine mit einem vergleichbar gestalteten Hülsenmagazin ist auch in der DE 32 41 032 C2 beschrieben. Auch dieses bekannte Hülsenmagazin verfügt über mehrere nebeneinander angeordnete, mit Hülsenaufnahmedornen für Leerhülsen ausgestattete Speicherreihen und einen Hülsenschieber, der so konzipiert ist, dass er bei Betätigung alle Transportketten gleichzeitig bedient. Das heißt, auch bei dieser bekannten Einrichtung kann der Hülsenschieber stets nur alle in einer bestimmten Höhe positionierten Leerhülsen der Transportketten gemeinsam auf ein nachgeschaltetes Muldenband überführen.

Des Weiteren ist durch die DE 195 12 891 A1 ein Hülsenmagazin für einen Kreuzspulautomaten bekannt, das ebenfalls mehrere nebeneinander angeordnete Speicherreihen mit Hülsenaufnahmedornen aufweist, wobei die Speicherreihen entweder separat oder durch einen Gemeinschaftsmotor antreibbar sind. Außerdem sind auf den Hülsenaufnahmedornen benachbarter Speicherreihen jeweils Leerhülsen unterschiedlicher Garnpartien bevorratbar. Das Hülsenmagazin ist außerdem mit einer so genannten Hülsenausstoßvorrichtung ausgestattet, die quer zu den Speicherreihen verfahrbar ist.

Bei Anforderung einer bestimmten Leerhülse durch eine der Arbeitsstellen des Kreuzspulautomaten läuft die Hülsenausstoßvorrichtung zu der Speicherreihe, die die betreffenden Leerhülsen aufweist und überführt die dort in einer Übergabestellung positionierte Leerhülse auf einen nachgeschalteten Zwischenförderer, die die Leerhülse auf eine maschinenlange Leerhülsentransporteinrichtung übergibt, die die Leerhülsen zur anfordernden Arbeitsstelle fördert.

Ein vergleichbares bekanntes Hülsenmagazin weist ebenfalls mehrere mit Hülsenaufnahmedornen ausgestattete Speicherreihen auf, die durch mehrere separate Elektromotoren antreibbar sind. Das Hülsenmagazin verfügt beispielsweise über zwölf nebeneinander angeordnete Speicherreihen, wobei die Speicherreihen 1 - 4, die Speicherreihen 5 - 7, die Speicherreihen 8 - 10 und die Speicherreihen 11 und 12 jeweils mit einem eigenen Antrieb ausgestattet sind. Des Weiteren verfügt dieses bekannte Hülsenmagazin über einen entlang der Speicherreihen quer verfahrbaren, so genannten Hülsenwagen, der mit einem beweglichen Hülsengreifer ausgestattet ist.

Auch bei dieser bekannten Einrichtung läuft der Hülsenwagen im Bedarfsfall zu der Speicherreihe, die mit Leerhülsen der angeforderten Garnpartie bestückt ist. Der Hülsenwagen positioniert sich an der betreffenden Speicherreihe, fasst mit seinem Hülsengreifer die angeforderte Leerhülse und überführt die Leerhülse spitzenorientiert auf eine maschinenlange Leerhülsentransporteinrichtung, die die Leerhülsen zu der anfordernden Arbeitsstelle fördert.

Mittels derartiger Kreuzspulen herstellenden Textilmaschinen, die mit Hülsenmagazinen ausgestattet sind, welche über Speicherreihen verfügen, die zumindest teilweise separat antreibbar sind und einen mit einem Hülsengreifer ausgestatteten Hülsenwagen aufweisen, der bezüglich der Speicherreihen quer verfahrbar ist, können zwar problemlos verschiedene Garnpartien gleichzeitig erstellt werden; die bekannten Einrichtungen weisen allerdings den nicht unerheblichen Nachteil auf, dass die erzielbaren Taktzeiten relativ lang sind. Das heißt, nach Fertigstellen einer Kreuzspule müssen die Arbeitsstellen, bevor sie wieder neu gestartet werden können, oft verhältnismäßig lang auf eine frische Leerhülse warten. Da die Arbeitsstellen während dieser Wartezeit abgeschaltet sind, also nicht arbeiten, wirken sich solche Wartezeiten sehr negativ auf den Gesamtwirkungsgrad der Kreuzspulen herstellenden Textilmaschinen aus.

Ausgehend vom vorgenannten Stand der Technik liegt der Erfindung die Aufgabe zugrunde, ein Hülsenmagazin für eine Kreuzspulen herstellende Textilmaschine, das über mehrere antreibbare Speicherreihen verfügt, die mit Leerhülsen bestückbar sind, welche mittels eines Hülsenabstreifers auf ein nachgeschaltetes Quertransportband überführbar sind, so zu modifizieren, dass die Taktzeiten des Verteilungssystems verbessert werden. Das heißt, die Zeitspanne, die benötigt wird, um eine Leerhülse vom Hülsenmagazin zu einer eine frische Leerhülse anfordernden Arbeitsstelle zu überführen, soll durch die Erfindung deutlich verkürzt werden.

Diese Aufgabe wird erfindungsgemäß dadurch gelöst, dass das Hülsenmagazin mit einer Mehrzahl von Hülsenabstreifern ausgestattet ist, die jeweils bedarfsgerecht separat ansteuerbar sind.

Die erfindungsgemäße Ausbildung eines Hülsenmagazins mit einer Mehrzahl von einzeln ansteuerbaren Hülsenabstreifern hat insbesondere den Vorteil, dass eine angeforderte Leerhülse durch einen Hülsenabstreifer ohne Zeitverzug sofort, das heißt, ohne dass zunächst auf eine spezielle, verfahrbare Hülsenübergabeeinrichtung gewartet werden muss, vom Hülsenaufnahmedorn einer Speicherkette auf ein nachgeschaltes Quertransportband und von diesem auf eines der maschinenlangen Leerhülsentransportbänder überführbar ist. Das bedeutet, auf einer Kreuzspulen herstellenden Textilmaschine, deren Hülsenmagazin die erfindungsgemäße Ausbildung aufweist, können nicht nur mehrere unterschiedliche Garnpartien gleichzeitig gefertigt werden, sondern derartig ausgestattete Textilmaschinen zeichnen sich auch dadurch sehr positiv aus, dass die bei Kreuzspulen-/Leerhülsenwechseln erzielbaren Taktzeiten sehr kurz sind, was sich wiederrum sehr vorteilhaft auf den Gesamtwirkungsgrad der Kreuzspulen herstellenden Textilmaschine auswirkt.

Erfindungsgemäß ist vorgesehen, dass jede der Speicherreihen des Hülsenmagazins einen eigenen, definiert ansteuerbaren Hülsenabstreifer aufweist. Mit einem solchen Hülsenmagazin, bei dem jeder der separat ansteuerbaren Speicherreihen jeweils ein eigener, definiert ansteuerbarer Hülsenabstreifer zugeordnet ist, ist auf relativ einfache und zuverlässige Weise eine optimale Versorgung der Arbeitsstellen einer Kreuzspulen herstellenden Textilmaschine mit Leerhülsen zu gewährleisten, wobei die angeforderten Leerhülsen auch unterschiedlichen Garnpartien zugeordnet sein können. Dabei ist erfindungsgemäß eine der Umlenkrollen, über die das Endloszugmittel geführt wird, mit einem Einzelantrieb ausgestattet, der über eine Steuerleitung mit der Steuerung des Hülsenmagazins in Verbindung steht. Mittels des Einzelantriebs kann das Endloszugmittel bewegt und damit die Hülsenaufnahmedorne mit den Leerhülsen funktionsgerecht positioniert werden.

Vorteilhafte Ausgestaltungen der Erfindung sind Gegenstand der Unteransprüche.

Vorteilhafterweise weist jeder der Hülsenabstreifer einen Pneumatikantrieb auf, der über einen Pneumatikzylinder verfügt. Solche Pneumatikzylinder stellen im Textilmaschinenbau bewährte, kostengünstige Großserienteile dar, die außerdem leicht ansteuerbar sind und sich durch eine hohe Betriebsfestigkeit auszeichnen.

Allerdings können die Hülsenabstreifer anstelle mit einem Pneumatikantrieb auch mit einem Elektroantrieb ausgestattet sein.

Solche Elektroantriebe, die beispielsweise über einen Schrittmotor verfügen, können zum Beispiel über die Zentralsteuereinheit der Textilmaschine jederzeit bedarfsgerecht angesteuert werden, wobei der benötigte Steuerungsaufwand relativ gering ist. Das bedeutet, mit einem Hülsenabstreifer, der durch einen Elektroantrieb betätigt wird, ist ebenfalls auf relativ einfache Weise eine ordnungsgemäße Leerhülsenübergabe realisierbar.

Eine vorteilhafte Ausführungsform des erfindungsgemäßen Hülsenmagazins ist beispielsweise dadurch gegeben, dass jede der Speicherreihen des Hülsenmagazins mit Leerhülsen einer anderen Garnpartie bestückbar ist, wobei die verschiedenen Speicherreihen des Hülsenmagazins mit Leerhülsen unterschiedlicher Garnpartien bestückbar sind.

Durch eine solche Ausbildung wird es auf einfache Weise möglich, auf einer Kreuzspulen herstellenden Textilmaschine gleichzeitig und damit kostengünstig verschiedene, auch relativ kleine, Garnpartien zu fertigen. Das heißt, wenn benachbarte Speicherreihen eines Hülsenmagazins jeweils mit Leerhülsen einer anderen Garnpartie bestückbar sind, kann durch eine bedarfsgerechte Ansteuerung der zugehörigen Hülsenabstreifer gewährleistet werden, dass jede der Arbeitsstellen der Textilmaschine im Bedarfsfall stets schnell und zuverlässig mit einer Leerhülse der angeforderten Garnpartie versorgt wird.

Die Erfindung betrifft außerdem ein Verfahren zum Betreiben eines Hülsenmagazins für eine Kreuzspulen herstellende Textilmaschine, die an beiden Maschinenlängsseiten eine Vielzahl von Arbeitsstellen aufweist. Das Hülsenmagazin verfügt über mehrere antreibbare, nebeneinander angeordnete Speicherreihen, die jeweils mit Leerhülsen bestückbar sind und jeweils über ein Endloszugmittel verfügen, das über Umlenkrollen geführt ist und eine Vielzahl von Hülsenaufnahmedornen aufweist, auf denen spitzenorientiert, jeweils eine Leerhülse deponierbar ist. Die Leerhülsen sind mittels eines Hülsenabstreifers auf ein nachgeschaltetes Quertransportband überführbar. Das erfindungsgemäße Verfahren ist deshalb besonders vorteilhaft, weil bei Anforderung einer Leerhülse durch eine Arbeitsstelle sofort der separat angeordnete, definiert ansteuerbare Hülsenabstreifer der Speicherreihe aktiviert wird, die mit Leerhülsen der angeforderten Garnpartie bestückt ist. Das bedeutet, der aktivierte Hülsenabstreifer überführt die angeforderte Leerhülse ohne Zeitverzögerung sofort, das heißt, ohne dass auf irgendeine verfahrbare Übergabeeinrichtung gewartet werden muss, vom Hülsenaufnahmedorn einer Speicherkette auf ein nachgeschaltetes Quertransportband, das seinerseits die Leerhülse sofort auf das zugehörige, maschinenlange Leerhülsentransportband übergibt. Dabei ist erfindungsgemäß eine der Umlenkrollen, über die das Endloszugmittel geführt wird, mit einem Einzelantrieb ausgestattet, der über eine Steuerleitung mit der Steuerung des Hülsenmagazins in Verbindung steht. Mittels des Einzelantriebs wird das Endloszugmittel bewegt und damit die Hülsenaufnahmedorne mit den Leerhülsen funktionsgerecht positioniert werden.

Mit dem erfindungsgemäßen Verfahren können folglich auf sehr sichere Weise mehrere unterschiedliche Garnpartien gleichzeitig gefertigt werden, wobei die erzielbaren Taktzeiten sehr kurz sind und die Textilmaschine entsprechend einen sehr günstigen Gesamtwirkungsgrad aufweist.

Weitere Einzelheiten der Erfindung sind den nachfolgend anhand der Zeichnungen erläuterten Ausführungsbeispielen entnehmbar.

Es zeigt:

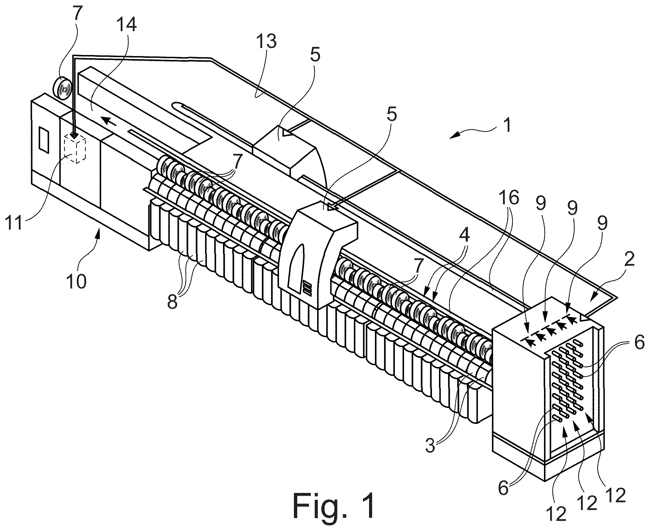

- Fig. 1: in perspektivischer Ansicht eine Offenend-Rotorspinnmaschine mit einem maschinenendseitig angeordneten Hülsenmagazin, das mehrere Speicherreihen für Leerhülsen aufweist, die einzelmotorisch antreibbar sind und denen jeweils ein separater, definiert ansteuerbarer Hülsenabstreifer zugeordnet ist,

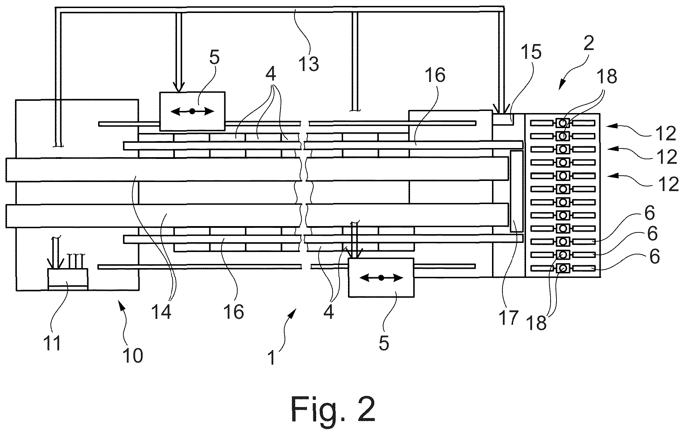

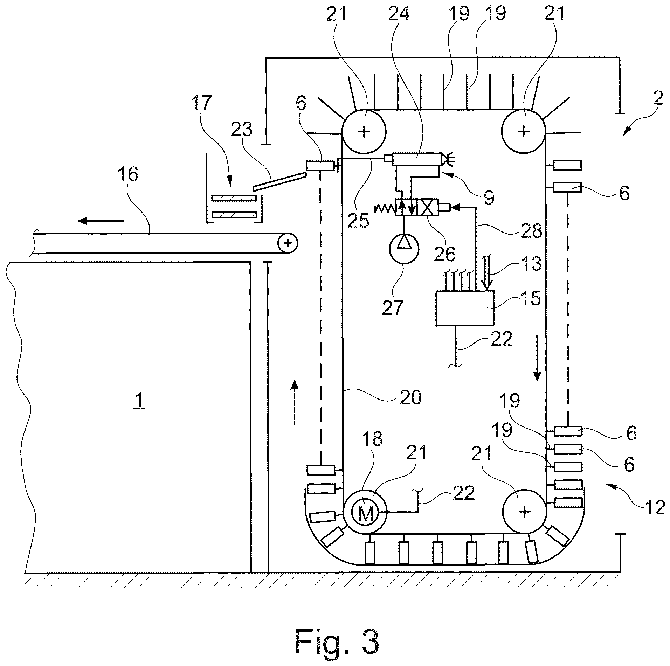

- Fig. 2: schematisch in Draufsicht eine Offenend-Rotorspinnmaschine mit einem maschinenendseitig angeordneten Hülsenmagazin, das ebenfalls separat antreibbare Hülsenabstreifer aufweist, die den einzelnen, separat antreibbaren Speicherreihen des Hülsenmagazins zugeordnet sind, wobei aus Gründen einer besseren Übersichtlichkeit allerdings auf eine nähere Darstellung dieser in der Fig. 3 näher dargestellten Hülsengreifer verzichtet wurde,
- Fig. 3: schematisch in Seitenansicht und im Schnitt ein Hülsenmagazin, dessen Speicherreihen separat antreibbar sind und die jeweils mit einem separat ansteuerbaren Hülsenabstreifer ausgestattet sind.

Die Fig. 1 zeigt in perspektivischer Ansicht eine Kreuzspulen herstellenden Textilmaschine mit einem Maschinenendgestell 10, in dem die Zentralsteuereinheit 11 der Textilmaschine installiert ist und einem im gegenüberliegenden Maschinenendbereich angeordneten Hülsenmagazin 2. Die Kreuzspulen herstellende Textilmaschine ist als Offenend-Rotorspinnmaschine 1 ausgebildet und weist, wie bekannt, eine Vielzahl von Arbeitsstellen 4 auf, die auf beiden Maschinenlängsseiten der Offenend-Rotorspinnmaschine 1 angeordnet sind.

Die Arbeitsstellen 4 sind dabei, wie üblich, jeweils mit einer Offenend-Spinnvorrichtung 3 sowie einer nachgeschalteten (nicht näher dargestellten) Spulvorrichtung ausgestattet. Im Zuge des Spinn-/Spulbetriebes verarbeiten die Arbeitsstellen 4 Fasermaterial, das in Spinnkannen 8 bevorratet ist, die jeweils unterhalb der Offenend-Spinnvorrichtungen 3 positioniert sind, zu Kreuzspulen 7. Wie ersichtlich, ist die Offenend-Rotorspinnmaschine 1 des Weiteren mit Serviceaggregaten 5 ausgestattet, die zum Beispiel an einer Schienenkonstruktion verfahrbar gelagert sind.

Die Serviceaggregate 5, die über ein Bussystem 13 mit der Zentralsteuereinheit 11 der Offenend-Rotorspinnmaschine 1 verbunden sind, sind zum Beispiel als so genannte Wechsel- und Reinigerwagen ausgebildet und greifen ein, wenn an einer der Arbeitsstellen 4 ein Bedienfall ansteht. Ein solcher Bedienfall ist beispielsweise gegeben, wenn an einer der Arbeitsstellen 4 eine Kreuzspule 7 ihren vorgegebenen Durchmesser erreicht hat und gegen eine frische Leerhülse 6 ausgetauscht werden muss.

Derartige Offenend-Rotorspinnmaschinen 1 verfügen in der Regel außerdem über eine Kreuzspulentransporteinrichtung 14, das heißt, solche Textilmaschinen weisen zwischen ihren Arbeitsstellen 4 wenigstens ein maschinenlanges Transportband zum Abtransportieren von fertiggestellten Kreuzspulen 7 auf. Außerdem sind solche Offenend-Rotorspinnmaschinen 1 meistens mit einer so genannten Leerhülsenversorgungseinrichtung ausgestattet, die im Ausführungsbeispiel aus einem maschinenendseitig angeordneten, erfindungsgemäß ausgebildeten Hülsenmagazin 2 und einer erfindungsgemäß ausgebildeten Leerhülsenversorgungseinrichtung besteht. Das Hülsenmagazin 2 weist dabei, wie an sich bekannt, mehrere, einzelmotorisch antreibbare Speicherreihen 12 mit Hülsenaufnahmedornen 19 für Leerhülsen 6 auf.

Erfindungsgemäß ist jeder der Speicherreihen 12 des Hülsenmagazins 2 ein eigener, separat ansteuerbarer Hülsenabstreifer 9 zugeordnet. Die Hülsenabstreifer 9 sind dabei, zum Beispiel über eine Hülsenmagazinsteuerung 15 und ein Bussystem 13 steuerungstechnisch an die Zentralsteuereinheit 11 der Offenend-Rotorspinnmaschine 1 angeschlossen.

Die Leerhülsenversorgungseinrichtung weist des Weiteren, wie bekannt, zwei maschinenlange Leerhülsentransportbänder 16 sowie im Bereich des Hülsenmagazins 2 ein in Fig. 1 nicht dargestelltes Quertransportband 17 auf.

Im Bedarfsfall, das heißt, wenn an einer der Arbeitsstellen 4 ein Kreuzspulen-/Leerhülsenwechsel ansteht, schiebt der Hülsenabstreifer 9 der betreffenden Speicherreihe 12 eine frische Leerhülse 6 vom Hülsenaufnahmedorn 19 auf das hinter dem Hülsenmagazin 2 angeordneten Quertransportband 17, das die Leerhülse 6 zu einem der maschinenlangen Leerhülsentransportbänder 16 befördert. Das Leerhülsentransportband 16 bringt die Leerhülse 6 dann zu der Arbeitsstelle 4, die die Leerhülse 6 angefordert hat und an der bereits eines der Serviceaggregate 5 positioniert ist.

Die Fig. 2 zeigt eine Offenend-Rotorspinnmaschine 1 in Draufsicht. Wie ersichtlich ist die Offenend-Rotorspinnmaschine 1 mit einer Kreuzspulentransporteinrichtung 14 und einer Leerhülsenversorgungseinrichtung ausgestattet. Die Leerhülsenversorgungseinrichtung besteht dabei, wie ersichtlich, aus einem Hülsenmagazin 2, das mit einer Vielzahl von Speicherreihen 12 zur Aufnahme von Leerhülsen 6 ausgestattet ist. Die Speicherreihen 12 verfügen jeweils über einen Einzelantrieb 18, der beispielsweise als Schrittmotor ausgebildet und zum Beispiel über eine Hülsenmagazinsteuerung 15 und ein Bussystem 13 an die Zentralsteuereinheit 11 der Offenend-Rotorspinnmaschine 1 angeschlossen ist, die im Maschinenendgestell 10 der Textilmaschine installiert ist. Über die Zentralsteuereinheit 11 der Offenend-Rotorspinnmaschine 1 sind die Einzelantriebe 18 und damit die Speicherreihen 12 des Hülsenmagazins 2 definiert antreibbar. Über das Bussystem 13 sind auch die Serviceaggregate 5, die die Arbeitsstellen 4 im Bedienfall versorgen, an die Zentralsteuereinheit 11 angeschlossen.

Das Hülsenmagazin 2 verfügt außerdem, wie in Fig. 1 angedeutet, über eine Vielzahl von Hülsenabstreifern 9, die jeweils einer der Speicherreihen 12 des Hülsenmagazins 2 zugeordnet und separat ansteuerbar sind. Diese separat ansteuerbaren Hülsenabstreifer 9 schieben im Bedarfsfall, das heißt, wenn von einer der Arbeitsstellen 4 eine entsprechende Anforderung einer Leerhülse 6 an der Zentralsteuereinheit 11 eingeht, von dieser aktiviert, eine Leerhülse 6 von der Speicherreihe 12, die mit Leerhülsen 6 der angeforderten Garnpartie bestückt ist, auf ein hinter den Speicherreihen 12 angeordnetes Quertransportband 17. Das Quertransportband 17 befördert die Leerhülse 6 dann sofort zu dem Leerhülsentransportband 16, an dem die Arbeitsstelle 4 liegt, die die Leerhülse 6 angefordert hat.

Die Fig. 3 zeigt ein Ausführungsbeispiel eines erfindungsgemäß ausgebildeten Hülsenmagazins 2 in Seitenansicht sowie im Schnitt. Solche maschinenendseitig einer Offenend-Rotorspinnmaschine 1 angeordneten Hülsenmagazine 2 weisen eine Mehrzahl derartiger nebeneinander angeordneten Speicherreihen 12 auf. Gemäß Ausführungsbeispiel der Fig. 2 weist das Hülsenmagazin 2 zum Beispiel zwölf dieser Speicherreihen 12 auf, die gemäß Blickrichtung der Fig. 3 hintereinander angeordnet sind. In Fig. 3 ist lediglich eine dieser Speicherreihen 12 in Seitenansicht dargestellt. Wie ersichtlich, verfügt jede der Speicherreihen 12 über ein Endloszugmittel 20, das über Umlenkrollen 21 geführt ist und eine Vielzahl von Hülsenaufnahmedornen 19 aufweist, auf denen spitzenorientiert, jeweils eine Leerhülse 6 deponierbar ist.

Eine der Umlenkrollen 21 ist dabei mit einem Einzelantrieb 18 ausgestattet, der über eine Steuerleitung 22 mit der Steuerung 15 des Hülsenmagazins 2 in Verbindung steht. Mittels dieses Einzelantriebs 18 kann das Endloszugmittel 20 bewegt und damit die Hülsenaufnahmedorne 19 mit den Leerhülsen 6 funktionsgerecht positioniert werden.

Erfindungsgemäß ist außerdem jede der Speicherreihen 12 des Hülsenmagazins 2 mit einem eigenen separat ansteuerbaren Hülsenabstreifer 9 ausgestattet, der bei Bedarf eine Leerhülse 6 unverzüglich von ihrem Hülsenaufnahmedorn 19 schieben und dabei in Richtung der Leerhülsentransportbänder 16 befördern kann. Das heißt, beim vorliegenden Ausführungsbeispiel schiebt der Hülsenabstreifer 9 die Leerhülse 6 zunächst auf eine Rutsche 23, über die die Leerhülse 6 auf das Quertransportband 17 gelangt. Das Quertransportband 17, das reversibel antreibbar ist, transportiert die Leerhülse 6 zu dem Leerhülsentransportband 19, an dem die Arbeitsstelle 4 liegt die die Leerhülse 6 angefordert hat.

Die separat ansteuerbaren Hülsenabstreifer 9 können dabei insbesondere bezüglich ihres Antriebes durchaus verschiedene Ausführungsformen aufweisen. Der Hülsenabstreifer 9 kann beispielsweise pneumatisch oder elektrisch angetrieben werden.

Beim dargestellten Ausführungsbeispiel sind die Hülsenabstreifer 9 als pneumatisch aktivierbare Hülsenabstreifer 9 ausgebildet. Das heißt, unterhalb einer der oberen Umlenkrollen 21 für das Endloszugmittel 20 der Speicherreihe 12 ist ein Pneumatikzylinder 24 installiert, an dessen Kolbenstange ein Abstreifblech 25 angeschlossen ist. Das Abstreifblech 25 ist dabei so ausgebildet, dass es beim Ausfahren des Pneumatikzylinders 24 am Endloszugmittel 20 vorbei gleiten und die Leerhülse 6 von ihren Hülsenaufnahmedorn 19 schieben kann. Wie üblich, sind an den Pneumatikzylinder 24 Druckluftleitungen angeschlossen, die mit einer Druckluftquelle 27 verbunden sind. In die Druckluftleitungen ist außerdem ein zum Beispiel magnetisch schaltbares Pneumatikventil 26 eingeschaltet, welches über eine Steuerleitung 28 mit der Steuerung 15 der Hülsenmagazins 2 sowie über das Bussystem 13 mit der Zentralsteuereinheit 11 der Offenend-Rotorspinnmaschine 1 verbunden ist.

### Funktion der Einrichtung:

Vor jedem Betriebsstart der Kreuzspulen herstellenden Textilmaschine wird zunächst das Hülsenmagazin 2 "geladen". Das heißt, die zahlreichen Speicherreihen 12 des Hülsenmagazins 2 werden jeweils mit Leerhülsen 6 einer bestimmten Garnpartie bestückt, wobei nebeneinander angeordnete Speicherreihen 12 bedarfsgerecht entweder mit Leerhülsen 6 derselben Garnpartie oder mit Leerhülsen 6 anderer Garnpartien bestückt werden können. Die entsprechende Bestückung wird außerdem, zum Beispiel über eine Tastatur, an der Zentralsteuereinheit 11 der Offenend-Rotorspinnmaschine 1 eingegeben, die dann beim nachfolgenden Spinn-/Spulprozess gewährleistet, dass im Bedarfsfall stets eine Leerhülse 6 der richtigen Garnpartie an die anfordernde Arbeitsstelle 4 geliefert wird. Das heißt, wenn im Laufe des regulären Spinn-/Spulbetriebes an einer der Arbeitsstellen 4 ein Kreuzspulen-/Leerhülsenwechsel ansteht, weil die Kreuzspule 7 ihren vorgeschriebenen Durchmesser erreicht hat und schnellstmöglich gegen eine frische Leerhülse 6 ausgetauscht werden muss, wird durch die Steuereinrichtung der betreffenden Arbeitsstelle 4 ein Serviceaggregat 5, zum Beispiel ein Wechsel- und Reinigerwagen, angefordert, das daraufhin zu der betreffenden Arbeitsstelle 4 fährt und dort einrastet. Anschließend wird durch das Serviceaggregat 5 ein Kreuzspulen-/Leerhülsenwechsel initiiert, das heißt, die fertiggestellte Kreuzspule 7 wird durch das Serviceaggregat 5 auf eine hinter den Arbeitsstellen 4 angeordnete Kreuzspulentransporteinrichtung 14 überführt und von dieser zu einer maschinenendseitig angeordneten Spulenübergabestation transportiert.

Anschließend oder gleichzeitig wird durch das Serviceaggregat 5 oder die betreffende Arbeitsstelle 4 über das Bussystem 13 bei der Zentralsteuereinheit 11 der Offenend-Rotorspinnmaschine 1 eine frische Leerhülse 6 der betreffenden Garnpartie angefordert.

Die Zentralsteuereinheit 11 aktiviert daraufhin über das Bussystem 13 die Steuerung 15 des Hülsenmagazins 2 dahingehend, dass sofort ein Leerhülsenliefervorgang eingeleitet wird. Das heißt, im Bereich des Hülsenmagazins 2 wird der Hülsenabstreifer 9 aktiviert, der der Speicherreihe 12 zugeordnet ist, die mit Leerhülsen 6 der angeforderten Garnpartie bestückt ist. Das heißt, ein beispielsweise mit einem Pneumatikzylinder 24 ausgestatteter Hülsenabstreifer 9 schiebt mit seinem Abstreifblech 25 eine Leerhülse 6 vom Leerhülsenaufnahmedorn 19 der Speicherreihe 12 auf eine nachgeschaltete Rutsche 23, die die Leerhülse 6 auf ein reversibel antreibbares Quertransportband 17 weiterleitet. Das Quertransportband 17 überführt die Leerhülse 6 sofort auf das Leerhülsentransportband 16, an dem die Arbeitsstelle 4 liegt, die die Leerhülse 6 angefordert hat. Das betreffende Leerhülsentransportband 16 fördert die angeforderte Leerhülse 6 dann schnellstmöglich, spitzenorientiert zur betreffenden Arbeitsstelle 4, wo die Leerhülse 6 durch das Serviceaggregat 5 aufgenommen und in den Spulenrahmen der Spulvorrichtung der Arbeitsstelle 4 eingelegt wird.

Der Kreuzspulen-/Leerhülsenwechselzyklus ist damit abgeschlossen, an der betreffenden Arbeitsstelle 4 kann ein neuer Spinn-/Spulprozess gestartet werden.

### Bezugszeichenliste

- 1: Offenend-Rotorspinnmaschine
- 2: Hülsenmagazin
- 3: Offenend-Spinnvorrichtung
- 4: Arbeitsstelle
- 5: Serviceaggregat
- 6: Leerhülse
- 7: Kreuzspule
- 8: Spinnkanne
- 9: Hülsenabstreifer
- 10: Maschinenendgestell
- 11: Zentralsteuereinheit
- 12: Speicherreihe
- 13: Bussystem
- 14: Kreuzspulentransporteinrichtung
- 15: Hülsenmagazinsteuerung
- 16: Leerhülsentransportband
- 17: Quertransportband
- 18: Einzelantrieb
- 19: Hülsenaufnahmedorn
- 20: Endloszugmittel
- 21: Umlenkrolle
- 22: Steuerleitung
- 23: Rutsche
- 24: Pneumatikzylinder
- 25: Abstreifblech
- 26: Pneumatikventil
- 27: Druckluftquelle
- 28: Steuerleitung

## Patentansprüche

1. Hülsenmagazin (2) für eine Kreuzspulen herstellende Textilmaschine (1), die an beiden Maschinenlängsseiten eine Vielzahl von Arbeitsstellen (4) aufweist, wobei das Hülsenmagazin (2) über mehrere antreibbare, nebeneinander angeordnete Speicherreihen (12) verfügt, die mit Leerhülsen (6) bestückbar sind und jeweils über ein Endloszugmittel (20) verfügen, das über Umlenkrollen (21) geführt ist und eine Vielzahl von Hülsenaufnahmedornen (19) aufweist, auf denen spitzenorientiert, jeweils eine Leerhülse (6) deponierbar ist, und wobei das Hülsenmagazin (2) einen Hülsenabstreifer (9) aufweist, mit dem Leerhülsen (6) auf ein nachgeschaltetes Quertransportband (17) überführbar sind,
**dadurch gekennzeichnet,**
**dass** das Hülsenmagazin (2) mit einer Mehrzahl von Hülsenabstreifern (9) ausgestattet ist, die jeweils bedarfsgerecht separat ansteuerbar sind,
wobei jede der Speicherreihen (12) des Hülsenmagazins (2) einen eigenen, definiert ansteuerbaren Hülsenabstreifer (9) aufweist, und wobei eine der Umlenkrollen (21) mit einem Einzelantrieb (18) ausgestattet ist, der über eine Steuerleitung (22) mit der Steuerung (15) des Hülsenmagazins (2) in Verbindung steht.

2. Hülsenmagazin (2) nach einem der vorherigen Ansprüche, **dadurch gekennzeichnet, dass** jeder der Hülsenabstreifer (9) einen Pneumatikantrieb aufweist, der über einen Pneumatikzylinder (24) verfügt.

3. Hülsenmagazin (2) nach einem der vorherigen Ansprüche, **dadurch gekennzeichnet, dass** jeder der Hülsenabstreifer (9) mit einem Elektroantrieb ausgestattet ist.

4. Hülsenmagazin (2) nach einem der vorherigen Ansprüche, **dadurch gekennzeichnet, dass** jede der Speicherreihen (12) des Hülsenmagazins (2) jeweils mit Leerhülsen (6) der gleichen Garnpartie bestückt ist.

5. Hülsenmagazin (2) nach einem der vorherigen Ansprüche, **dadurch gekennzeichnet, dass** unterschiedliche Speicherreihen (12) des Hülsenmagazins (2) mit Leerhülsen (6) unterschiedlicher Garnpartien bestückbar sind.

6. Verfahren zum Betreiben eines Hülsenmagazins (2) für eine Kreuzspulen herstellende Textilmaschine (1), die an beiden Maschinenlängsseiten eine Vielzahl von Arbeitsstellen (4) aufweist, wobei das Hülsenmagazin (2) über mehrere antreibbare, nebeneinander angeordnete Speicherreihen (12) verfügt, die jeweils mit Leerhülsen (6) bestückbar sind und jeweils über ein Endloszugmittel verfügen, das über Umlenkrollen (21) geführt ist und eine Vielzahl von Hülsenaufnahmedornen (19) aufweist, auf denen spitzenorientiert, jeweils eine Leerhülse (6) deponierbar ist, und wobei die Leerhülsen (6) mittels eines Hülsenabstreifers (9) auf ein nachgeschaltetes Quertransportband (17) überführbar sind,
**dadurch gekennzeichnet,**
**dass** bei Anforderung einer Leerhülse (6) durch eine Arbeitsstelle (4) sofort ein separat angeordneter, definiert ansteuerbarer Hülsenabstreifer (9) der Speicherreihe (12) aktiviert wird, die mit Leerhülsen (6) der angeforderten Garnpartie bestückt ist,
und **dass** eine der Umlenkrollen (21) mit einem Einzelantrieb (18) ausgestattet ist, der über eine Steuerleitung (22) mit der Steuerung (15) des Hülsenmagazins (2) in Verbindung steht, und mittels des Einzelantriebs das Endloszugmittel bewegt wird und damit die Hülsenaufnahmedorne (19) mit den Leerhülsen (6) funktionsgerecht positioniert werden.

## Claims

1. Tube magazine (2) for a textile machine (1) producing cross-wound bobbins, which textile machine has a plurality of work stations (4) on both longitudinal sides of the machine, the tube magazine (2) having a plurality of drivable, adjacently arranged storage rows (12) which can be fitted with empty tubes (6) and which each have a continuous traction means (20) which is guided over deflection rollers (21), the tube magazine also having a plurality of tube receiving arbors (19), on each of which an empty tube (6) can be deposited in a tip-oriented manner, and the tube magazine (2) having a tube stripper (9) via which empty tubes (6) are transferable to a downstream transverse conveyor belt (17),
**characterized in that**
the tube magazine (2) is equipped with a plurality of tube strippers (9), each of which can be controlled separately as required,
each of the storage rows (12) of the tube magazine (2) having its own tube stripper (9) which can be controlled in a defined manner, and one of the deflection rollers (21) being equipped with an individual drive (18) which is connected to the control (15) of the tube magazine (2) via a control line (22).

2. Tube magazine (2) according to any of the preceding claims,
**characterized in that** each of the tube strippers (9) has a pneumatic drive which has a pneumatic cylinder (24).

3. Tube magazine (2) according to any of the preceding claims, **characterized in that** each of the tube strippers (9) is equipped with an electric drive.

4. Tube magazine (2) according to any of the preceding claims,
**characterized in that** each of the storage rows (12) of the tube magazine (2) is fitted with empty tubes (6) of the same yarn batch respectively.

5. Tube magazine (2) according to any of the preceding claims,
**characterized in that** different storage rows (12) of the tube magazine (2) can be fitted with empty tubes (6) of different yarn batches.

6. Method for operating a tube magazine (2) for a textile machine (1) producing cross-wound bobbins, which textile machine has a plurality of work stations (4) on both longitudinal sides of the machine, the tube magazine (2) having a plurality of drivable, adjacently arranged storage rows (12), each of which can be fitted with empty tubes (6) and which each have a continuous traction means which is guided over deflection rollers (21), the tube magazine also having a plurality of tube receiving arbors (19), on each of which an empty tube (6) can be deposited in a tip-oriented manner, and the empty tubes (6) being transferable to a downstream transverse conveyor belt (17) by means of a tube stripper (9),
**characterized in that**
when an empty tube (6) is requested by a work station (4), a separately arranged tube stripper (9) of the storage row (12), which tube stripper can be controlled in a defined manner, is immediately activated, the storage row being fitted with empty tubes (6) of the requested yarn batch,
**and in that** one of the deflection rollers (21) is equipped with an individual drive (18), which is connected to the control (15) of the tube magazine (2) via a control line (22), the continuous traction means is moved by means of the individual drive and the tube receiving arbors (19) together with the empty tubes (6) are thus positioned functionally.

## Revendications

1. Magasin de tubes (2) pour une machine textile (1) fabriquant des bobines croisées qui présente sur les deux côtés longitudinaux de machine une pluralité de postes de travail (4), dans lequel le magasin de tubes (2) dispose de plusieurs rangées de stockage (12) pouvant être entraînées et disposées les unes à côté des autres, lesquelles peuvent être garnies de tubes vides (6) et disposent respectivement d'un moyen de traction sans fin (20) qui est guidé par l'intermédiaire de poulies de renvoi (21) et qui présente une pluralité de mandrins de réception de tubes (19) sur lesquels respectivement un tube vide (6) peut être déposé en étant orienté vers la pointe, et dans lequel le magasin de tubes (2) présente un racleur de tubes (9) avec lequel des tubes vides (6) peuvent être transférés sur une bande transporteuse transversale (17) montée en aval,
**caractérisé en ce**
**que** le magasin de tubes (2) est équipé d'une pluralité de racleurs de tubes (9) qui peuvent être commandés séparément respectivement en fonction des besoins,
dans lequel chacune des rangées de stockage (12) du magasin de tubes (2) présente un racleur de tubes (9) propre pouvant être commandé de manière définie, et dans lequel l'une des poulies de renvoi (21) est équipée d'un entraînement individuel (18) qui est en liaison avec la commande (15) du magasin de tubes (2) par l'intermédiaire d'une ligne de commande (22).

2. Magasin de tubes (2) selon l'une des revendications précédentes, **caractérisé en ce que** chacun des racleurs de tubes (9) présente un entraînement pneumatique qui dispose d'un vérin pneumatique (24).

3. Magasin de tubes (2) selon l'une des revendications précédentes, **caractérisé en ce que** chacun des racleurs de tubes (9) est équipé d'un entraînement électrique.

4. Magasin de tubes (2) selon l'une des revendications précédentes, **caractérisé en ce que** chacune des rangées de stockage (12) du magasin de tubes (2) est respectivement garnie de tubes vides (6) du même lot de fils.

5. Magasin de tubes (2) selon l'une des revendications précédentes, **caractérisé en ce que** différentes rangées de stockage (12) du magasin de tubes (2) peuvent être équipées de tubes vides (6) de différents lots de fils.

6. Procédé permettant de faire fonctionner un magasin de tubes (2) pour une machine textile (1) fabriquant des bobines croisées qui présente sur les deux côtés longitudinaux de machine une pluralité de postes de travail (4), dans lequel le magasin de tubes (2) dispose de plusieurs rangées de stockage (12) pouvant être entraînées et disposées les unes à côté des autres, lesquelles peuvent être respectivement garnies de tubes vides (6) et disposent respectivement d'un moyen de traction sans fin qui est guidé par l'intermédiaire de poulies de renvoi (21) et présente une pluralité de mandrins de réception de tubes (19) sur lesquels respectivement un tube vide (6) peut être déposé en étant orienté vers la pointe, et dans lequel les tubes vides (6) peuvent être transférés sur une bande transporteuse transversale (17) montée en aval au moyen d'un racleur de tubes (9),
**caractérisé en ce**
**que,** lors de la demande d'un tube vide (6) par un poste de travail (4), un racleur de tubes (9) de la rangée de stockage (12), disposé séparément et pouvant être commandé de manière définie, est immédiatement activé, lequel est garni de tubes vides (6) du lot de fils demandé,
**et que** l'une des poulies de renvoi (21) est équipée d'un entraînement individuel (18) qui est en liaison avec la commande (15) du magasin de tubes (2) par l'intermédiaire d'une ligne de commande (22), et le moyen de traction sans fin est déplacé au moyen de l'entraînement individuel et les mandrins de réception de tubes (19) comportant les tubes vides (6) sont ainsi positionnés de manière fonctionnelle.
